(19) Europäisches Patentamt
European Patent Office
Office européen des brevets

(11) **EP 1 359 718 A1**

(12) **EUROPÄISCHE PATENTANMELDUNG**

(43) Veröffentlichungstag:
**05.11.2003 Patentblatt 2003/45**

(51) Int Cl.⁷: **H04L 27/26**, H04L 27/36

(21) Anmeldenummer: **02009775.4**

(22) Anmeldetag: **30.04.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **SIEMENS AKTIENGESELLSCHAFT**
**80333 München (DE)**

(72) Erfinder: **Jelonnek, Björn**
**89079 Ulm (DE)**

(54) **Verfahren zur Amplitudenbegrenzung eines trägerfrequenten Ausgangssignals**

(57) Die Erfindung betrifft ein Verfahren zur Bildung eines trägerfrequenten Ausgangssignals aus n Teilsignalen eines Basisfrequenzbands. Jedes einzelne der n Teilsignale wird jeweils einem Hauptzweig als Eingangssignal zugeordnet. Im Hauptzweig wird das entsprechende Teilsignal amplitudenbegrenzt, gefiltert und in ein zwischenfrequentes Teilsignal umgewandelt. Die zwischenfrequenten n Teilsignale werden als Ausgangssignale der Hauptzweige zu einem gemeinsamen Summensignal zusammengefasst. Das Summensignal wird amplitudenbegrenzt, digital-analog-gewandelt und in das trägerfrequente Ausgangssignal umgesetzt. Jedes Teilsignal gelangt zusätzlich an einen Nebenzweig, mit dessen Hilfe zu erwartende Signalüberhöhungen des Teilsignals im entsprechenden Hauptzweig als Schätzwerte ermittelt werden. Mit Hilfe der Schätzwerte werden im Hauptzweig die dort jeweils durchgeführten Amplitudenbegrenzungen der entsprechenden Teilsignale gesteuert.

## FIG 2

**Beschreibung**

Verfahren zur Bildung eines trägerfrequenten Ausgangssignals aus n Teilsignalen eines Basisfrequenzbands

Die Erfindung betrifft ein Verfahren zur Bildung eines trägerfrequenten Ausgangssignals aus n Teilsignalen eines Basisfrequenzbands, bei dem jedes einzelne der n Teilsignale jeweils einem Hauptzweig als Eingangssignal zugeordnet wird. Im jeweiligen Hauptzweig wird das Teilsignal amplitudenbegrenzt, gefiltert und in ein zwischenfrequentes Teilsignal umgewandelt, wobei die zwischenfrequenten n Teilsignale als Ausgangssignale der Hauptzweige zu einem gemeinsamen Summensignal zusammengefasst werden. Das gemeinsame Summensignal wird amplitudenbegrenzt, digital-analog-gewandelt und in das trägerfrequente Ausgangssignal umgewandelt.

Bei Funkkommunikationssystemen, die gemäß dem EDGE- oder dem UMTS-Standard ausgeprägt sind, werden beim sogenannten "Singlecarrier-Ansatz" beispielsweise komplexe Basisband-Teilsignale zur Erzeugung von trägerfrequenten Teilsignalen linear moduliert und überlagert. Dabei weisen die trägerfrequenten Teilsignale keine konstanten Momentanleistungen auf.

Beim einzelnen trägerfrequenten Teilsignal treten, bedingt durch die lineare Modulation, maximale Amplitudenwerte bzw. maximale Leistungswerte auf, die wesentlich über dem Leistungsmittelwert des trägerfrequenten Teilsignals liegen. Es ergibt sich ein sogenannter "peak-to-average"-Wert PAR>1.

Das trägerfrequente Teilsignal wird einem HF-Ausgangsverstärker zugeführt, dessen Verstärkerkennlinie für eine lineare Verstärkung entsprechende Reserven aufweisen muss, um nichtlineare Verzerrungen beim Verstärker-Ausgangssignal zu vermeiden.

Ein derartiger Verstärker wird durch die Reserve-Anforderung sehr komplex im Aufbau und weist einen erhöhten Leistungsverbrauch auf. Zusätzlich ergeben sich Verringerungen beim Gesamtwirkungsgrad des Übertragungssystems.

Beim sogenannten Multicarrier-Ansatz werden mehrere Basisband-Teilsignale mit sich unterscheidenden Trägerfrequenzen moduliert in einen Zwischenfrequenzbereich überführt. Dort werden die zwischenfrequenten Teilsignale kohärent zu einem Summensignal zusammengefasst. Das Summensignal wird in ein trägerfrequentes Ausgangssignal überführt und gelangt an den HF-Ausgangsverstärker. Auch hier treten beim trägerfrequenten Ausgangssignal maximale Amplitudenwerte bzw. maximale Leistungswerte auf, die wesentlich über dem Leistungs-Mittelwert des trägerfrequenten Ausgangssignals liegen. Wieder müssen beim HF-Ausgangsverstärker entsprechende Reserven vorhanden sein.

Sowohl beim Singlecarrier- als auch beim Multicarrier-Ansatz werden bei den Teilsignalen zur Amplitudenbegrenzung einerseits im Basisband und andererseits im Zwischenfrequenzbereich sogenannte "Clipping-Verfahren" angewendet.

Bei den in Basisband angewendeten Clipping-Verfahren wird das Teilsignal in seinem Frequenzband stark verzerrt. Mit Hilfe sogenannter "root-raised-cosine"-Filtern (RRC-Filter) werden zur Reduzierung von Störungen in Nachbarfrequenzbändern die durch Clipping verursachten Verzerrungen sowie das Teilsignal selbst spektral begrenzt.

Die RRC-Filter bilden zusätzlich lineare Kombinationen aus vergangenen und gegenwärtigen Zustandswerten des Teilsignals, da mit Hilfe der RRC-Filter eine Interpolation des Teilsignals erfolgt. Dadurch wird der maximale Amplitudenwert des durch die Clipping-Verfahren in der Amplitude begrenzten Teilsignals wiederum deutlich erhöht.

Bei Clipping-Verfahren im Zwischenfrequenzbereich werden die maximalen Amplitudenwerte nicht erhöht, jedoch werden starke Störungen in benachbarten Frequenzbändern erzeugt.

Sowohl im Basisfrequenzband als auch im Zwischenfrequenzband kommen alternativ zwei Clipping-Verfahren zur Anwendung.
Beim leicht realisierbaren "Rechteck-Clipping" werden sowohl Inphasekomponente als auch Quadraturkomponente des Teilsignals unabhängig voneinander in der Amplitude begrenzt.
Beim "zirkularen Clipping" überschreitet ein aus dem komplexen Teilsignal gebildeter Betrag einen vorbestimmten Maximalwert nicht.

Aufgabe der vorliegenden Erfindung ist es, digitale komplexe Teilsignale derart in ihren Amplitudenwerten zu begrenzen, dass sie einem Verstärker mit geringen Verstärkungsreserven zuführbar sind.

Die Aufgabe der Erfindung wird durch die Merkmale des Anspruchs 1 gelöst. Vorteilhafte Weiterbildungen der Erfindung sind in den Unteransprüchen angegeben.

Durch die erfindungsgemäß erfolgende Bestimmung der zu erwartenden Signalüberhöhungen innerhalb des Basisbands und durch die Bildung von Steuerinformationen zur Beeinflussung des Basisband-Clippings werden Amplitudenüberhöhungen beim Basisband-Teilsignal vermieden und Störungen des trägerfrequenten Sendesignals verringert.

Durch das erfindungsgemäße Verfahren wird bei einem gleichen "error-vector-magnitude"-Wert EVM eine Verringerung des "peak-to-average-ratio"-Werts PAR beim Teilsignal erzielt.

Im Folgenden wird ein Ausführungsbeispiel der Erfindung anhand einer Zeichnung näher erläutert. Dabei zeigt:

FIG 1 ein vereinfachtes Blockschaltbild zur Bildung eines trägerfrequenten UMTS-Sendesignals aus mehreren Teilsignalen gemäß dem Stand der Technik,

FIG 2 ein vereinfachtes Blockschaltbild zur Bildung eines trägerfrequenten UMTS-Sendesignals aus mehreren Teilsignalen gemäß der Erfindung,

FIG 3 ein Ausführungsbeispiel zur Bildung von in FIG 2 dargestellten Informationssignalen,

FIG 4 einen Frequenzgang eines RRC-Filters,

FIG 5 bis

FIG 9 Signalfolgen von in FIG 3 dargestellten Teilfiltern,

FIG 10 ein weiteres vereinfachtes Blockschaltbild zur Bildung eines trägerfrequenten UMTS-Sendesignals aus einem Teilsignal gemäß der Erfindung,

FIG 11 ein erstes Ausführungsbeispiel zur Bildung eines in FIG 10 dargestellten Informationssignals, und

FIG 12 ein zweites Ausführungsbeispiel zur Bildung des in FIG 10 dargestellten Informationssignals.

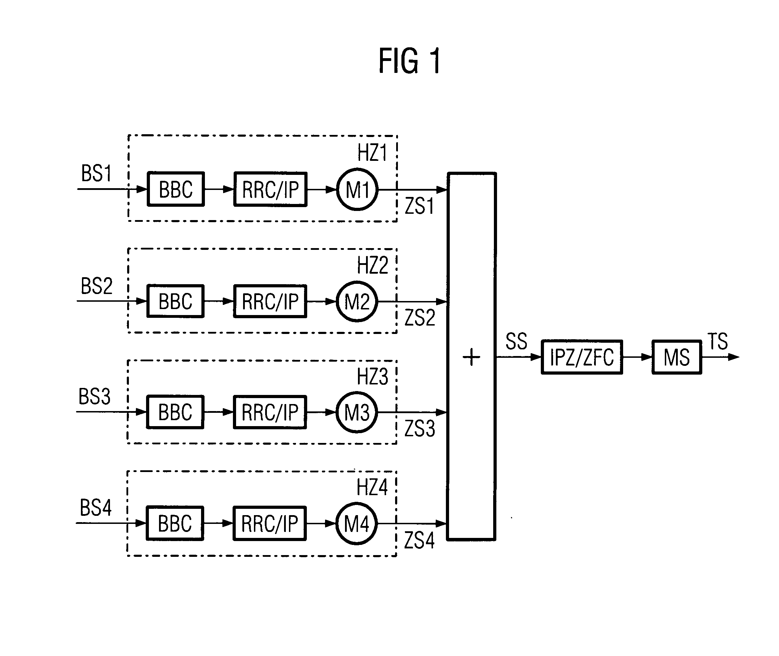

FIG 1 zeigt ein vereinfachtes Blockschaltbild zur Bildung eines trägerfrequenten UMTS-Sendesignals TS aus mehreren digitalen Teilsignalen BS1, BS2, BS3 und BS4, gemäß dem Stand der Technik.

Bei einer hier dargestellten "Multicarrier-Anordnung" werden die Teilsignale BS1 bis BS4 in jeweils verschiedene zwischenfrequente Teilsignale ZS1, ZS2, ZS3 und ZS4 transformiert und zu einem gemeinsamen Summensignal SS zusammengefasst. Dieses gemeinsame Summensignal SS wird in das trägerfrequente UMTS-Sendesignal TS transformiert.

Die Teilsignale BS1, BS2, BS3 und BS4 eines Basisfrequenzbandes sind jeweils einem Hauptzweig HZ1, HZ2, HZ3 und HZ4 zugeordnet.

Ein erstes Teilsignal BS1 gelangt an einen ersten Hauptzweig HZ1, wird durch eine dort angeordnete Baugruppe BBC in seiner Amplitude begrenzt, mit Hilfe eines Root-Raised-Cosine Filters RRC gefiltert, mit Hilfe einer Interpolationsstufe IP interpoliert und mit Hilfe eines ersten Mischers M1 in ein erstes zwischenfrequentes Teilsignal ZS1 umgewandelt.

Vergleichbar dazu werden die Teilsignale BS2 bis BS4 mit Hilfe der Hauptzweige HZ2 bis HZ4 in weitere zwischenfrequente Teilsignale ZS2 bis ZS4 transformiert, wobei die zwischenfrequenten Teilsignale ZS1 bis ZS4 verschiedene Trägerfrequenzen aufweisen.

Die zwischenfrequenten Teilsignale ZS1 bis ZS4 gelangen an eine Summationseinrichtung und werden dort zu einem gemeinsamen Summensignal SS zusammengefasst. Das Summensignal SS wird wiederum mit Hilfe einer Baugruppe IPZ interpoliert, mit Hilfe einer Einrichtung ZFC amplitudenbegrenzt und in ein analoges Signal umgewandelt und wird abschließend mit Hilfe eines Modulators MS in das trägerfrequente UMTS-Sendesignal TS umgewandelt.

Die oben beschriebenen Nachteile der Amplitudenbegrenzung im Basisband (Baseband-Clipping, BBC) sowie im Zwischenfrequenzbereich (ZFC) gelten entsprechend.

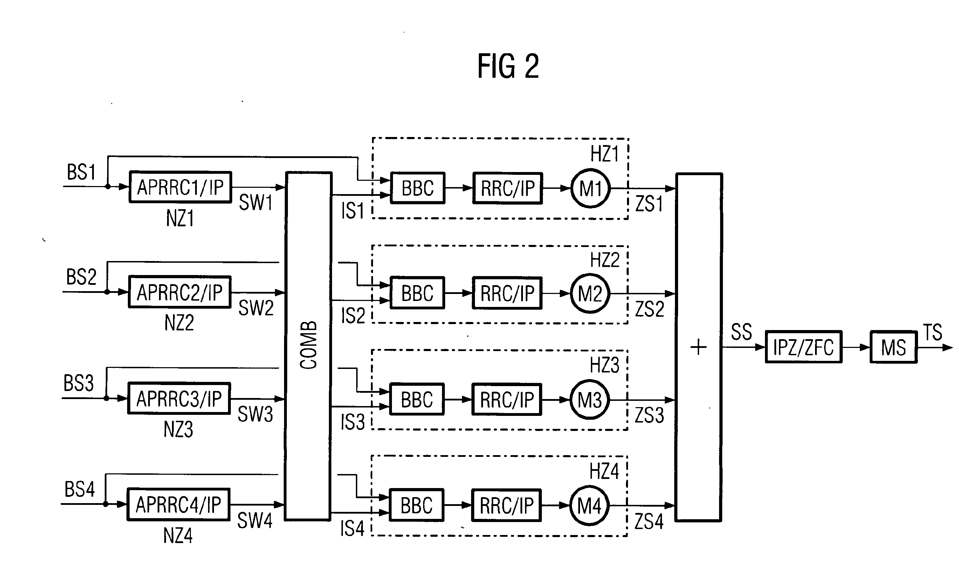

FIG 2 zeigt ein vereinfachtes Blockschaltbild zur Bildung eines trägerfrequenten UMTS-Sendesignals TS aus mehreren digitalen Teilsignalen BS1, BS2, BS3 und BS4, gemäß der Erfindung.

Vergleichend mit FIG 1 gelangen die einzelnen Teilsignale BS1 bis BS4 als Eingangssignale sowohl an jeweils einen Hauptzweig HZ1, HZ2, HZ3 und HZ4 als auch jeweils an einen Nebenzweig NZ1, NZ2, NZ3 und NZ4.

Somit ist beispielsweise dem ersten Teilsignal BS1 der erste Hauptzweig HZ1 und ein erstes Nebenzweig NZ1 zuordenbar. Mit Hilfe des ersten Nebenzweiges NZ1 werden die im zugeordneten Hauptzweig HZ1 durch die Amplitudenbegrenzung zu erwartenden Signalüberhöhungen des zwischenfrequenten Teilsignals ZS1 als Schätzwert SW1 ermittelt, der als Ausgangssignal des Nebenzweigs NZ1 an einen gemeinsamen Kombinierer COMB gelangt.

Die zu erwartende Signalüberhöhung im Hauptzweig HZ1 wird im Nebenzweig NZ1 mit Hilfe einer Baugruppe APRRC1 ermittelt. Vorteilhafterweise erfolgt zusätzlich eine Interpolation (IP).

Vergleichend dazu werden für die Teilsignale BS2 bis BS4 entsprechende Schätzwerte SW2, SW3 und SW4 für die zu erwartenden Signalüberhöhungen in den Hauptzweigen HZ2, HZ3 und HZ4 ermittelt, wobei diese Schätzwerte SW2 bis SW4 ebenfalls an den gemeinsamen Kombinierer COMB gelangen.

Der gemeinsame Kombinierer COMB bildet für jedes einzelne Teilsignal BS1 bis BS4 jeweils ein spezielles Informationssignal IS1, IS2, IS3 bzw. IS4, das zur Steuerung der Amplitudenbegrenzung im jeweiligen Hauptzweig HZ1 bis HZ4 verwendet wird.

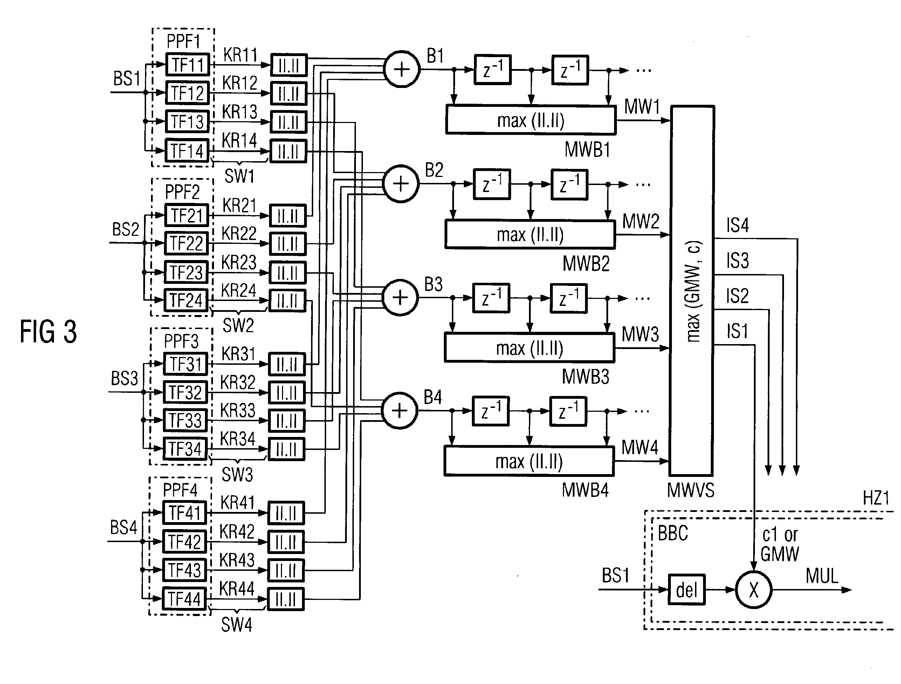

FIG 3 zeigt ein Ausführungsbeispiel zur Bildung von in FIG 2 dargestellten Informationssignalen IS1, IS2, IS3 und IS4.

Jedes einzelne der vier Teilsignale BS1 bis BS4 des Basisfrequenzbands gelangt als Eingangssignal an ein Polyphasenfilter PPF1, PPF2, PPF3 bzw. PPF4. Ein erstes Polyphasenfilter PPF1 beinhaltet dabei vier parallel zueinander angeordnete Teilfilter TF11, TF12, TF13 und TF14. Ein zweites Polyphasenfilter PPF2 beinhaltet vier parallel zueinander angeordnete Teilfilter TF21, TF22, TF23 und TF24. Für die Polyphasenfilter PPF3 bzw. PPF4 gilt entsprechendes.

Das erste Teilsignal BS1 gelangt beispielsweise an das erstes Polyphasenfilter PPF1, bzw. an dessen vier Teilfilter TF11 bis TF14. Ein erstes Teilfilter TF11 bildet aus dem ersten Eingangssignal BS1 eine erste Signalfolge KR11 mit einem entsprechend dem RRC-Filter des Hauptzweigs HZ1 verlaufenden Amplitudenfrequenzgang und um eine feste Zeitdifferenz gegenüber den Abtastzeitpunkten vom ersten Teilsignal BS1 versetzten Abtastwerten.

Entsprechend werden Signalfolgen KR12, KR13 bzw. KR14 mit Hilfe der Teilfilter TF12, TF13 bzw. TF14 des ersten Polyphasenfilters PPF1 gebildet, wobei die Signalfolgen KR11 bis KR14 des ersten Polyphasenfilters PPF1 den in FIG 2 dargestellten Schätzwert SW1 repräsentieren.

Gleiches gilt für die Teilsignale BS2 bis BS3, die an entsprechende Polyphasenfilter PPF2 bis PPF4 gelangen, wobei für die Teilsignale BS2 bis BS4 wieder Signalfolgen KR21, KR22, ..., KR44 gebildet werden.

Mit n=1,2,3,4 werden die jeweils ersten Signalfolgen KRn1 der Polyphasenfilter PPF1 bis PPF4 betragsmäßig zu einer ersten Betragssumme B1 zusammengefasst. Damit wird für die oben angesprochenen Abtastzeitpunkte die maximal möglichen Werte des interpolierten, modulierten Summensignals SS abgeschätzt.

Gleiches erfolgt für andere Zeitdifferenzen mit den zweiten, dritten bzw. vierten Signalfolgen KRn2, KRn3 bzw. KRn4, die betragsmäßig zur jeweiligen Betragssumme B2, B3 bzw. B4 zusammengefasst werden. Aufgrund der Zeitdifferenzen bei den einzelnen Teilfiltern TFn1 bis TFn4 beeinflusst ein zu einem bestimmten festen Zeitpunkt auftretender Signalwert - beispielsweise bei BS1 - mehrere Werte des Summensignals SS. Mit Hilfe der nachfolgend beschriebenen Anordnung wird der maximale Wert dieser beeinflussten mehreren Werte ermittelt.

Stellvertretend für die Betragssummen B1 bis B4 betrachtet gelangt zur Ermittlung des Maximalwerts die erste Betragssumme B1 einerseits direkt und andererseits mit Hilfe von mehreren Zeitgliedern $z^{-1}$ jeweils zeitverzögert an eine erste Maximalwertbildungseinrichtung MWB1, mit deren Hilfe ein erster Maximalwert MW1 gebildet wird. Dieser Maximalwert enthält eine Information über eine maximal auftretende Amplitude beim Summensignal SS bei einer bestimmten Zeitverzögerung.

Weitere Maximalwerte MW2, MW3 bzw. MW4 werden entsprechend aus den Betragssummen B2, B3 bzw. B4 gebildet. Die Maximalwerte MW1 bis MW4 werden einer gemeinsamen Maximalwertvergleicherstufe MWVS zugeführt und beinhalten Informationen über die maximal auftretenden Amplituden bei weiteren Zeitverzögerungen.

Mit Hilfe der Maximalwertvergleicherstufe MWVS wird ein aus den Maximalwerten MW1 bis MW4 gebildeter gemeinsamer Maximalwert GMW berechnet, der somit Informationen über den maximal auftretenden Wert des Summensignals SS beinhaltet, an dem das jeweilige Teilsignal BS1, BS2, BS3 bzw. BS4 beteiligt ist. Der gemeinsame Maximalwert GMW wird mit einem systembedingt vorgegebenen "Clippingwert" c verglichen und so für jeden einzelnen Hauptzweig HZ1 bis HZ4, basierend auf dem Vergleich, das entsprechende Informationssignal IS1 bis IS4 gebildet, das jeweils zur Steuerung der Amplitudenbegrenzung dem entsprechenden Hauptzweig zugeführt wird.

Dabei gilt (hier mit $1 \leq x \leq 4$):

$$ISx = \begin{cases} c & \text{für} \quad GMW < c \\ GMW & \text{sonst.} \end{cases}$$

mit c als vorgegebenen Clippingwert.

Dabei wird beispielsweise ein gemeinsamer Clippingwert c für alle Teilsignale BS1 bis BS4 verwendet. Oder aber es wird für jedes Teilsignal ein spezifischer Clippingwert cx verwendet, also ein Clippingwert c1 für das Teilsignal BS1, ein Clippingwert c2 für das Teilsignal BS2, usw.

Im vorliegenden Beispiel sei c=c1=c2=c3=c4.

Beispielhaft ist hier der Hauptzweig HZ1 gezeigt, bei dem einerseits das erste Informationssignal IS1 an die Baugruppe BBC zur Amplitudenbegrenzung und andererseits über ein Laufzeitglied del das erste Teilsignal BS1 laufzeitverzögert angeschaltet ist.

Die Steuerung der Amplitudenbegrenzung erfolgt mit Hilfe eines Multiplikators MUL, dem das Informationssignal IS1 als vorgegebener Clippingwert c1 bzw. als Maximalwert GMW zur Multiplikation mit dem ersten Teilsignal BS1 zugeführt wird. Ein vom Multiplikator MUL gebildetes Multiplikator-Ausgangssignal gelangt zur weiteren Verarbeitung.

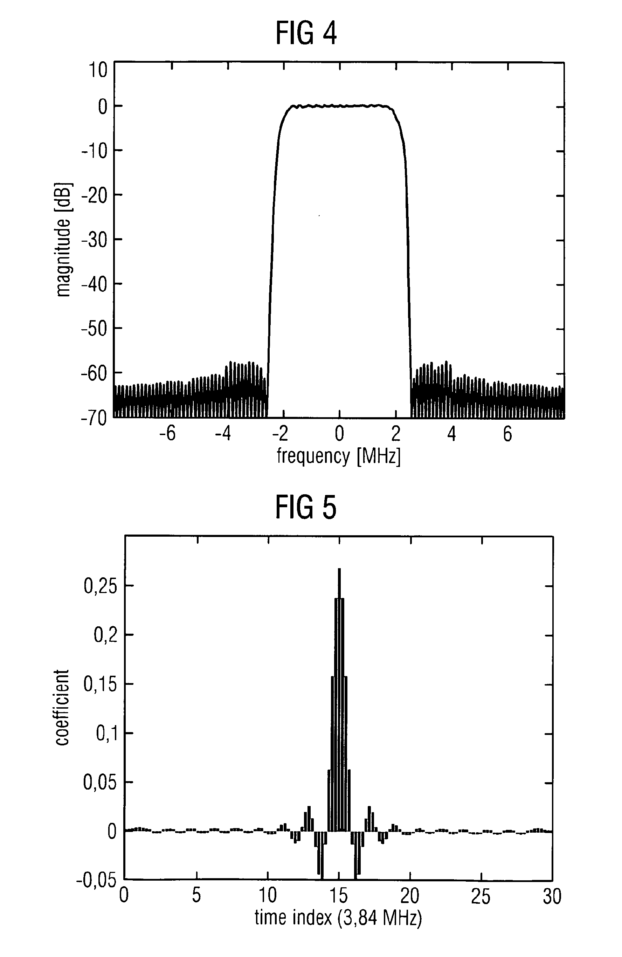

FIG 4 zeigt einen Frequenzgang eines RRC-Filters (Cosinus-Roll-Off-Filter).

Dabei ist auf der X-Achse eine Frequenzabweichung von einer Mittenfrequenz in MHz angegeben, während auf der Y-Achse zugehörige Dämpfungswerte in dB angegeben sind.

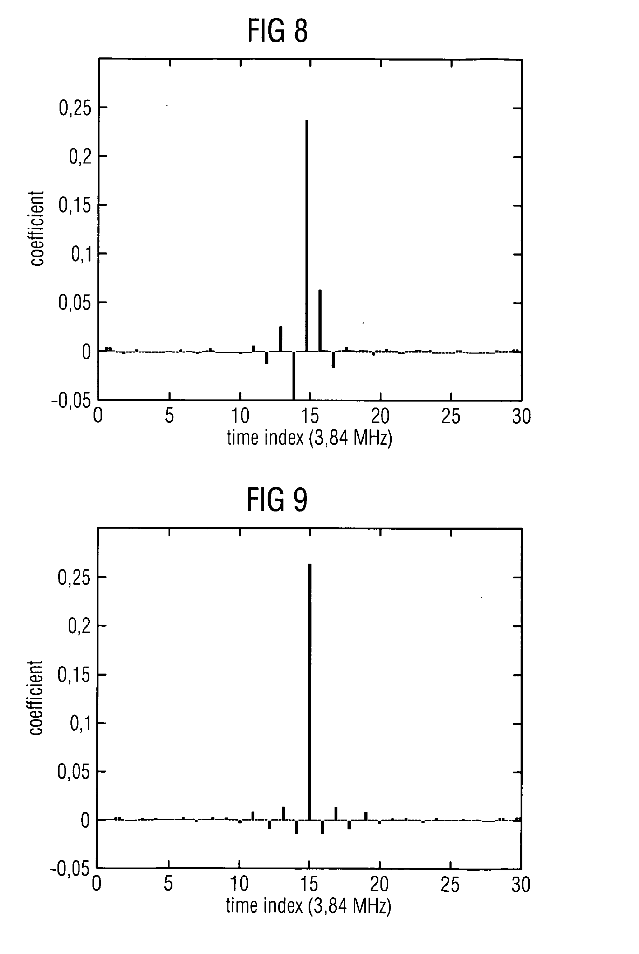

FIG 5 bis FIG 9 zeigen Signalfolgen von in FIG 3 dargestellten Teilfiltern.

FIG 5 zeigt eine Signalfolge des in FIG 4 dargestellten Frequenzganges bei einer Interpolation um einen Faktor n=4.

Auf der X-Achse ist eine Zeit t in einem Zeitraster von T=1/3,84MHz unterteilt aufgetragen, auf der Y-Achse sind zugehörige Koeffizienten als Datenwerte der Signalfolge aufgetragen.

Bei einer Interpolation um einen Faktor 4 werden jeweils drei "0"-Werte zwischen Nutzdaten eingefügt, was zu einer periodischen Wiederholung des jeweiligen Nutzsignalspektrums im Frequenzbereich führt. Durch die eingefügten "0"-Werte treten bei einer direkten Bildung einer Faltungssumme Multiplikationen mit einem Ergebnis "0" auf, die somit nicht: explizit durchgeführt werden müssen. Bei genauer Betrachtung erhält man nun vier Teilfilter, die jeweils im Abtasttakt der Teilsignale BS1 bis BS4 arbeiten und zusammen ein RRC-Filter ergeben.

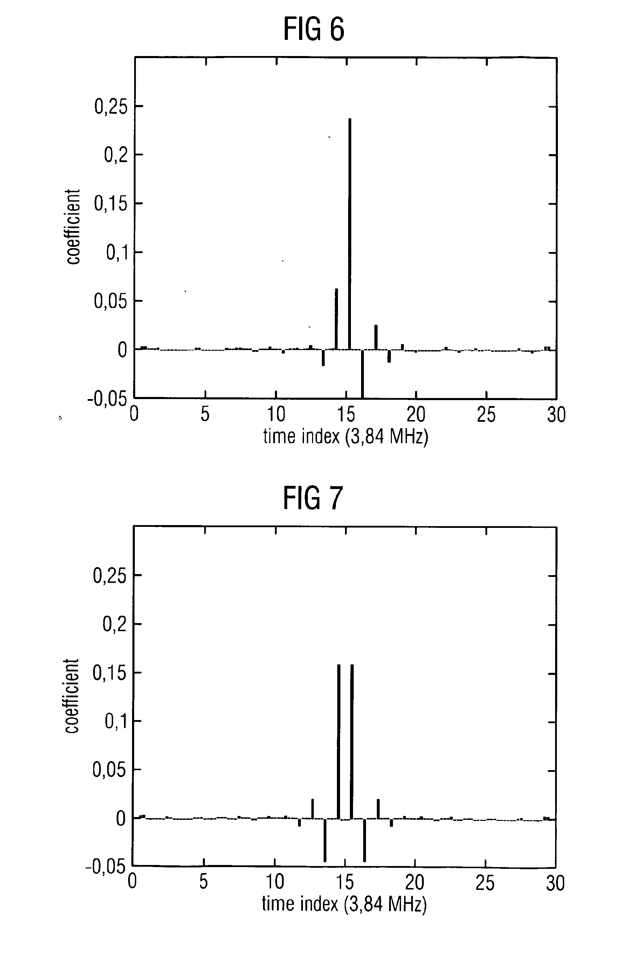

FIG 6, FIG 7, FIG 8 und FIG 9 zeigen, vergleichend mit FIG 6, an der Y-Achse abzulesende Koeffizienten als Datenwerte von Signalfolgen der vier Teilfilter.

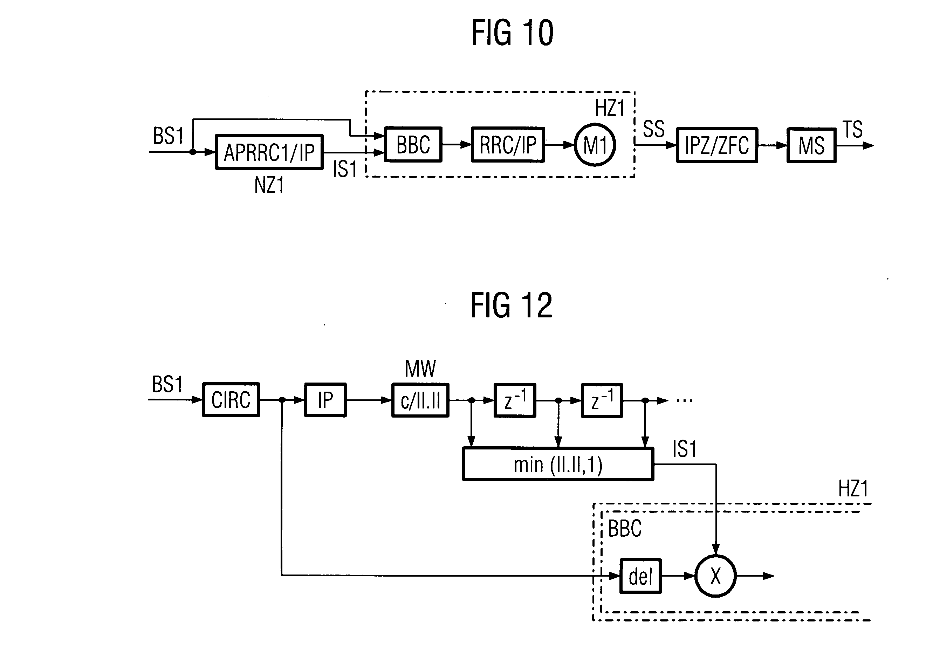

FIG 10 zeigt ein weiteres vereinfachtes Blockschaltbild zur Bildung eines trägerfrequenten UMTS-Sendesignals TS aus einem Teilsignal BS1, gemäß der Erfindung.

Es wird eine sogenannte "Single-Carrier-Anordnung" betrachtet. Wieder gelangt ein Teilsignal BS1 einerseits an den Hauptzweig HZ1 und andererseits an den Nebenzweig NZ1 als Eingangssignal.
Innerhalb des Hauptzweiges HZ1 wird das Teilsignal BS1 amplitudenbegrenzt (BBC), gefiltert (RRC) und interpoliert (IP). Vergleichend mit FIG 2 wird im Nebenzweig NZ1 eine zu erwartende Signalüberhöhung im Hauptzweig mit Hilfe einer Baugruppe APRRC1 geschätzt und ein Informationssignal IS1 gebildet, das zur Steuerung der Amplitudenbegrenzung an den Hauptzweig HZ1 gelangt.

Die hier gezeigte "Single-Carrier-Anordnung" wird "Multi-Carrier"-fähig, wenn das Teilsignal BS1 aus mehreren Signalen S11, S12, S13,...,S1k (hier nicht gezeigt) durch Modulation und Kombination hervorgeht und das RRC-Filter entsprechend der bei der Modulation verwendeten Frequenzen entsprechende Nutzsignalbänder ungedämpft und alle weiteren Teilsignalbänder gedämpft passieren lässt.

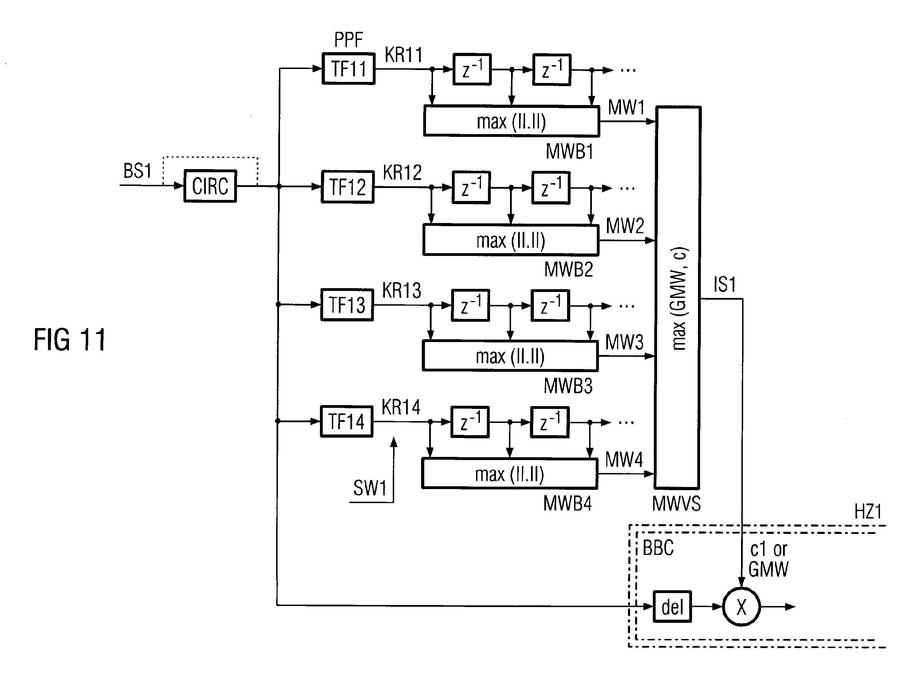

FIG 11 zeigt ein erstes Ausführungsbeispiel zur Bildung des in FIG 10 dargestellten Informationssignals IS1.

Am Teilsignal BS1 wird zuerst im Basisfrequenzband ein zirkulares Clipping-Verfahren angewendet - hier als Einrichtung CIRC dargestellt. Das zirkulare Clipping-Verfahren ist hier optional, jedoch besonders vorteilhaft, da Überhöhungen des Teilsignals BS1 im normalen Abtastzeitraster unterdrückt werden.

Danach gelangt es an ein Polyphasenfilter PPF, bestehend aus vier Teilfiltern TF11, TF12, TF13 bzw. TF14 zur Bildung von Signalfolgen KR11 bis KR14. Diese gelangen, vergleichend mit FIG 3, einerseits direkt und andererseits mit Hilfe mehrerer Zeitglieder $z^{-1}$ jeweils zeitlich verzögert an Maximalwertbildungseinrichtungen MWB1 bis MWB4, deren Maximalwerte MW1 bis MW4 wieder an eine Maximalwertvergleichsstufe MWVS gelangen. Wieder wird nach dem oben beschriebenen Verfahren ein Informationssignal IS1 gebildet, das zur Steuerung der Amplitudenbegrenzung dem Hauptzweig HZ1 zugeführt wird.

FIG 12 zeigt ein zweites Ausführungsbeispiel zur Bildung des in FIG 10 dargestellten Informationssignals 151.

In dieser hinsichtlich des Implementierungsaufwands optimierten Variante gelangt das erste Teilsignal BS1 nach einem zirkularen Clipping-Verfahren (CIRC) über eine Interpolationseinrichtung IP an eine Maximalwerteinrichtung MW. Die Interpolationseinrichtung IP ist als Halbbandfilter mit einem Interpolationsfaktor 2 ausgelegt und stellt damit nur eine grobe Näherung des RRC-Filterfrequenzganges dar.

Bei einer derartigen Wahl entartet das erste Teilfilter TF11 aus FIG 11 zu einer einfachen Zeitverzögerung, wodurch die Signalfolge KR11 aufgrund des vorhergehenden zirkularen Clipping-Verfahrens eine vorgegebene Clippingschwelle c nicht überschreitet. Überschreitungen der Clippingschwelle c können also nur noch durch die Signalfolge KR12 des zweiten Teilfilters TF12 auftreten - hier als Interpolationseinrichtung IP gekennzeichnet. In diesem Fall muss das Teilsignal BS1 im der Einrichtung BBC weiter reduziert werden. Diese Reduzierung erfolgt beispielsweise, indem bei der Maximalwerteinrichtung MW ein Betragskehrwert der Signalfolge KR12 gebildet und dieser mit der Clippingschwelle c multipliziert wird.

Man erhält nun einen Skalierungsfaktor IS1, mit dem das Teilsignal BS1 skaliert werden muss, um es betragsmäßig auf den Wert der Clippingschwelle c zu normieren.

Wie bereits beschrieben, ist auch hier der Signalwert des Teilsignals BS1 an mehreren Werten der Signalfolge KR12 beteiligt. Mit der nun durchgeführten Minimumbildung wird ein kleinster Skalierungsfaktor IS1 derart bestimmt, dass auch ein größter Wert der Signalfolge KR12 betragsmäßig maximal auf den Wert der Clippingschwelle c normiert wird.

Um eine Anhebung von Signalamplituden beim Teilsignal BS1 zu vermeiden, wird der Skalierungsfaktor IS1 auf einen Wert von "1" betragsmäßig begrenzt.


**Patentansprüche**

**1.** Verfahren zur Bildung eines trägerfrequenten Ausgangssignals (TS) aus n Teilsignalen (BS1, BS2, BS3, BS4) eines Basisfrequenzbands,

- bei dem jedes einzelne der n Teilsignale (BS1,...,BS4) jeweils einem Hauptzweig (HZ1, HZ2, HZ3, HZ4) als Eingangssignal zugeordnet wird und im jeweiligen Hauptzweig (HZ1,...,HZ4) das Teilsignal (BS1,...,BS4) amplitudenbegrenzt, gefiltert und in ein zwischenfrequentes Teilsignal (ZS1, ZS2, ZS3, ZS4) umgewandelt wird,

- bei dem die zwischenfrequenten n Teilsignale (ZS1,...,ZS4) zu einem Summensignal (SS) zusammengefasst werden, und

- bei dem das Summensignal (SS) amplitudenbegrenzt und digital-analog-gewandelt in das trägerfrequente Ausgangssignal (TS) umgewandelt wird,

**dadurch gekennzeichnet,**

- **dass** im Basisfrequenzband jedes einzelne der n Teilsignale (BS1,...,BS4) parallel zum Hauptzweig (HZ1,..., HZ4) jeweils einem Nebenzweig (NZ1, NZ2, NZ3, NZ4) als Eingangssignal zugeordnet wird,

- **dass** im zugeordneten Nebenzweig (NZ1,...,NZ4) für jedes Teilsignal (BS1,...,BS4) die im entsprechend zugeordneten Hauptzweig (HZ1,...,HZ4) jeweils zu erwartende Signalüberhöhung des Teilsignals (BS1,...,BS4) als Schätzwert (SW1, SW2, SW3, SW4) ermittelt wird,

- **dass** aus den n Schätzwerten (SW1,...,SW4) der n Nebenzweige (NZ1,...,NZ4) für jeden Hauptzweig (HZ1,..., HZ4) je ein Informationssignal (IS1, IS2, IS3, IS4) gebildet wird,

- **dass** mit Hilfe des Informationssignals (IS1,...,IS4) die Amplitudenbegrenzung im jeweiligen Hauptzweig (HZ1,...,HZ4) derart gesteuert wird, dass das trägerfrequente Ausgangssignal (TS) amplitudenbegrenzt und verzerrungsarm ist.

2. Verfahren nach Anspruch 2, **dadurch gekennzeichnet, dass** im Hauptzweig (HZ1,...,HZ4) das zugeordnete Teilsignal (BS1,...,BS4) einem Root-Raised-Cosine-Filter (RRC) zugeführt wird.

3. Verfahren nach Anspruch 1 oder 2, **dadurch gekennzeichnet, dass** mit $1 \leq i \leq n$ im i-ten Nebenzweig (NZ1,...NZ4) zur Ermittlung des i-ten Schätzwerts (SW1,...,SW4) das dem i-ten Nebenzweig zugeordnete i-te Teilsignal (BS1,..., BS4) entsprechend der Zahl aller n Teilsignale mehrfach gefiltert (TFi1, TFi2, TFi3, TFi4) wird und aus den sich aus allen Filterungen sich ergebenden maximalen Werten eine Signalfolge (KRil, KRi2, KRi3, KRi4) gebildet wird, die den Schätzwert (SWi) des i-ten Nebenzweigs (NZ1,...,NZ4) bildet.

4. Verfahren nach Anspruch 3, **dadurch gekennzeichnet, dass** bei den n Nebenzweigen (NZ1,...,NZ4) die Signalfolgen (KRil,...,KRi4) von jeweils zur Filterung verwendeter i-ter Teilfilter (TFi1,...,TFi4) betragsmäßig zu einer i-ten Betragssumme (BS1, BS2, BS3, BS4) addiert werden und aus der i-ten Betragssumme (BS1,...,BS4) ein i-ter Maximalwert (MW1, MW2, MW3, MW4) gebildet wird.

5. Verfahren nach Anspruch 4, **dadurch gekennzeichnet, dass** aus den m Maximalwerten (MW1,...,MW4) ein gemeinsamer Maximalwert (GMW) gebildet und mit einem vorgegebenen Clippingwert (c) verglichen wird und anhand dieses Vergleichs den Hauptzweigen (HZ1,...,HZ4) zuordenbare Informationssignale (IS1,...,IS4) gebildet werden.

6. Verfahren nach einem der vorhergehenden Ansprüche, **dadurch gekennzeichnet, dass** im Hauptzweig (HZ1,..., HZ4) das zugeordnete Informationssignal (IS1,...,IS4) mit dem zeitlich verzögerten Teilsignal (BS1,...,BS4) multipliziert wird.

7. Verfahren nach einem der vorhergehenden Ansprüche, **dadurch gekennzeichnet, dass** ein i-tes Teilsignal (BS1) durch Modulation und Kombination einzelner Signale erzeugt wird und ein RRC-Filter verwendet wird, der den Modulationsfrequenzen entsprechende Nutzsignalbänder nur unwesentlich, jedoch weitere Teilsignalbänder dämpft.

FIG 1

EP 1 359 718 A1

# FIG 2

EP 1 359 718 A1

FIG 3

## FIG 4

## FIG 5

## FIG 6

## FIG 7

## FIG 8

## FIG 9

EP 1 359 718 A1

# FIG 10

BS1

APRRC1/IP
NZ1
IS1

HZ1
BBC → RRC/IP → M1

SS

IPZ/ZFC → MS → TS

# FIG 12

BS1 → CIRC → IP → MW c/‖.‖ → $z^{-1}$ → $z^{-1}$ → ...

min (‖.‖,1)

IS1

HZ1

BBC

del → X

# FIG 11

EP 1 359 718 A1

PPF

TF11 KR11  $z^{-1}$  $z^{-1}$  ...

max (II.II)  MW1

MWB1

BS1  CIRC  TF12 KR12  $z^{-1}$  $z^{-1}$  ...

max (II.II)  MW2

MWB2

max (GMW, c)  IS1

TF13 KR13  $z^{-1}$  $z^{-1}$  ...

max (II.II)  MW3

MWB3

TF14 KR14  $z^{-1}$  $z^{-1}$  ...

SW1

max (II.II)  MW4

MWB4  MWVS

HZ1

BBC

c1 or
GMW

del  X

Europäisches
Patentamt

## EUROPÄISCHER RECHERCHENBERICHT

Nummer der Anmeldung

EP 02 00 9775

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | VANKKA J ET AL: "A MULTICARRIER QAM MODULATOR" IEEE TRANSACTIONS ON CIRCUITS AND SYSTEMS II: ANALOG AND DIGITAL SIGNAL PROCESSING, Bd. 47, Nr. 1, Januar 2000 (2000-01), Seiten 1-10, XP000951710 IEEE, NEW YORK, US ISSN: 1057-7130 * Seite 3, Spalte 1, Absatz 1 * * Abbildung 3 * * Abbildung 5 * | 1,2,7 | H04L27/26 H04L27/36 |
| A | DE 198 24 233 A (ERICSSON TELEFON AB L M) 2. Dezember 1999 (1999-12-02) * Seite 2, Zeile 33 – Zeile 38 * * Seite 3, Zeile 21 – Zeile 22 * * Seite 5, Zeile 15 – Zeile 18 * * Seite 6, Zeile 54 – Zeile 59 * * Abbildung 1 * | 1,2 | |
| A | US 6 337 999 B1 (ORBAN ROBERT A) 8. Januar 2002 (2002-01-08) * Seite 5, Spalte 2, Zeile 33 – Zeile 55 * * Abbildung 1 * | 4,6 | RECHERCHIERTE SACHGEBIETE (Int.Cl.7) H04L |

Der vorliegende Recherchenbericht wurde für alle Patentansprüche erstellt

| Recherchenort | Abschlußdatum der Recherche | Prüfer |
|---|---|---|
| DEN HAAG | 30. September 2002 | Moreno, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 02 00 9775

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-09-2002

| Im Recherchenbericht angeführtes Patentdokument | | Datum der Veröffentlichung | Mitglied(er) der Patentfamilie | | Datum der Veröffentlichung |
|---|---|---|---|---|---|
| DE 19824233 | A | 02-12-1999 | DE | 19824233 A1 | 02-12-1999 |
| | | | AU | 4038199 A | 20-12-1999 |
| | | | CN | 1303562 T | 11-07-2001 |
| | | | WO | 9963723 A1 | 09-12-1999 |
| | | | EP | 1080568 A1 | 07-03-2001 |
| | | | JP | 2002517951 T | 18-06-2002 |
| | | | TW | 432807 B | 01-05-2001 |
| US 6337999 | B1 | 08-01-2002 | AU | 2192500 A | 03-07-2000 |
| | | | EP | 1142109 A1 | 10-10-2001 |
| | | | WO | 0036743 A1 | 22-06-2000 |

EPO FORM P0461

Für nähere Einzelheiten zu diesem Anhang : siehe Amtsblatt des Europäischen Patentamts, Nr. 12/82